# EUROPÄISCHE PATENTANMELDUNG

(11) **EP 4 197 339 A1**
(43) Veröffentlichungstag der Anmeldung: **21.06.2023**
(21) Anmeldenummer: 22193637.0
(22) Anmeldetag: 02.09.2022
(51) Int. Cl.: A22C 11/10

(54) **VORRICHTUNG UND VERFAHREN ZUR HERSTELLUNG VON LEBENSMITTELPRODUKTEN IN WÜRSTCHENFORM**

(30) Priorität: 29.09.2021 DE 102021125210
(71) Anmelder: Heinrich Frey Maschinenbau GmbH, 89542 Herbrechtingen-Bolheim (DE)
(72) Erfinder: Frey, Heinrich, 89542 Herbrechtingen (DE); La Delfa, Marcel, 89537 Giengen/Brenz (DE)
(74) Vertreter: Manitz Finsterwald Patent- und Rechtsanwaltspartnerschaft mbB

(57) **Zusammenfassung**

Die Erfindung betrifft eine Vorrichtung zur Herstellung von Lebensmittelprodukten in Würstchenform aus einem ein jeweiliges vorgegebenes oder vorgebbares Kaliber aufweisenden Strang, der eine pastöse Masse und eine diese Masse umgebende Hülle umfasst, wobei die Vorrichtung zum Formen der Produktenden wenigstens eine Formstation aufweist, wobei die Formstation einen an das jeweilige Kaliber angepassten Durchgang für den Strang bildet und zumindest ein Paar von zusammenwirkenden, miteinander synchronisiert bewegbaren Formelementen umfasst, welche jeweils wenigstens eine Formkante umfassen, die sich bei sich bewegendem Formelement auf einer Bahn in dem Durchgang bewegt, und wobei die beiden Formkanten auf ihrer Bahn in dem Durchgang eine Relativstellung durchlaufen, in der ein von den beiden Formkanten gemeinsam gebildeter Formspalt minimal ist und der Strang zur Bildung einer jeweiligen Formstelle durch die beiden zusammenwirkenden Formkanten beaufschlagbar ist.

## Beschreibung

Die Erfindung betrifft eine Vorrichtung zur Herstellung von Lebensmittelprodukten in Würstchenform aus einem ein jeweiliges vorgegebenes oder vorgebbares Kaliber aufweisenden Strang, der eine pastöse Masse und eine diese Masse umgebende Hülle, insbesondere eine Alginathülle, umfasst.

Es ist bereits bekannt, bei der industriellen Produktion von Lebensmittelprodukten in Würstchenform (im Folgenden auch einfach "Würste" oder "Würstchen") auf einen Naturdarm oder Kunstdarm als Produkthülle zu verzichten. Befördert wird dieser Verzicht durch die zunehmenden Kosten für Darm und durch den zunehmenden Wunsch der Verbraucher nach einer vegetarischen oder veganen Ernährung. Im Hinblick auf diesen Trend und/oder auch aufgrund von Vorteilen bei der Produktion von Würstchen ohne Darm ist es bereits bekannt, in einem kontinuierlichen Prozess einen aus einer jeweiligen pastösen Masse gebildeten Strang mit einem im fertigen Produkt die Hülle bildenden Material zu versehen, das zum Beispiel als Flüssigkeit oder Paste aufgebracht wird. Ein bekanntes Beispiel für ein in diesem Zusammenhang eingesetztes Hüllenmaterial ist Alginat. Als pastöse Masse kommen unter anderem sowohl herkömmliches Wurstbrät als auch vegetarische oder vegane Lebensmittelmassen in Frage. Ein solches Aufbringen von Hüllenmaterial hat unter anderem den Vorteil, dass die entstehende Hülle bei der Würstchenproduktion insbesondere hinsichtlich Dicke und Bissfestigkeit individuell eingestellt werden kann. Zudem ist von Vorteil, dass derartige Hüllen wasserunlöslich und hitzestabil sind und sich deshalb wie gewohnt zum Brühen, Räuchern und Trocknen der Produkte eignen. Ein Alginat oder eine Alginatlösung, das bzw. die um den aus der pastösen Masse gebildeten Strang gelegt wird, erstarrt in wenigen Sekunden, so dass sich der dadurch entstehende Produktstrang grundsätzlich wie gewohnt weiterverarbeiten lässt.

Von Nachteil ist hierbei allerdings, dass das herkömmliche Abdrehen von Würsten, wie es bei einer von einem Darm gebildeten Hülle in der Praxis regelmäßig durchgeführt wird, bei den hier in Rede stehenden und beispielsweise von einem Alginat gebildeten Hüllen schwierig oder - zumindest bei bestimmten Gegebenheiten - unmöglich ist.

Aufgabe der Erfindung ist es daher, eine Vorrichtung der eingangs genannten Art zu schaffen, mit der aus dem die pastöse Masse und die umgebende Hülle umfassenden Strang Würstchen ohne Abdrehen geformt werden können, wobei insbesondere erreicht werden soll, dass die Produktenden die bekannte und typische, herkömmlich durch das Abdrehen erzeugte Form von Wurstenden aufweisen, und dass verhindert wird, dass die Masse an den Produktenden ungewollt austritt.

Die Lösung dieser Aufgabe erfolgt jeweils durch die Merkmale der unabhängigen Ansprüche.

Erfindungsgemäß ist vorgesehen, dass die Vorrichtung zum Formen der Produktenden wenigstens eine Formstation aufweist, die einen an das jeweilige Kaliber angepassten Durchgang für den Strang bildet und die zumindest ein Paar von zusammenwirkenden, miteinander synchronisiert bewegbaren Formelementen umfasst, welche jeweils wenigstens eine Formkante umfassen, die sich bei sich bewegendem Formelement auf einer Bahn in dem Durchgang bewegt, und wobei die beiden Formkanten auf ihrer Bahn in dem Durchgang eine Relativstellung durchlaufen, in der ein von den beiden Formkanten gemeinsam gebildeter Formspalt minimal ist und der Strang zur Bildung einer jeweiligen Formstelle durch die beiden zusammenwirkenden Formkanten beaufschlagbar, insbesondere eindrückbar, ist.

In bevorzugten Ausführungsformen kann vorgesehen sein, dass die Vorrichtung zwei oder mehrere hintereinander angeordnete, bevorzugt unterschiedlich orientierte, Formstationen aufweist. Diese Formstationen sind dann vorzugsweise relativ zueinander stationär angeordnet, d.h. eine Relativbewegung zwischen den Formstationen erfolgt vorzugsweise nicht.

Wenn sich der Strang und die Formstation relativ zueinander bewegen, wobei insbesondere die Formstation stationär ist und der Strang durch den Durchgang hindurch gefördert wird, dann können die Formelemente mit ihren Formkanten den sich relativ zur Formstation bewegenden Strang mechanisch beaufschlagen und so gemeinsam im Strang eine Formstelle ausbilden, um auf diese Weise gleichzeitig das hintere Produktende und das vordere Produktende zweier unmittelbar aufeinanderfolgender Produkte, also Würstchen, zu formen. Die Form der Produktenden kann auch durch die Form der Formelemente bestimmt werden, insbesondere durch die Form von sich an eine jeweilige Formkante angrenzenden Bereichen der Formelemente. Die Formelemente sorgen mit ihren Formkanten für eine Querschnittsreduzierung des Strangs an einer jeweiligen Formstelle und verleihen dort aufgrund ihrer Formgebung den beiden Produktenden ihre Form.

Die Geschwindigkeit der den Strang beaufschlagenden Formkanten auf ihrer Bahn kann - beispielsweise mittels einer den Betrieb der Vorrichtung steuernden Steuereinrichtung - auf die Geschwindigkeit des Strangs relativ zur Formstation derart abgestimmt werden, dass die Förderbewegung des Strangs nicht beeinträchtigt wird, der Strang durch die Formelemente oder deren Formkanten also weder abgebremst noch beschleunigt wird. Es findet also mittels der Formstation gewissermaßen eine "fliegende Bearbeitung" des sich relativ zu der Formstation bewegenden Strangs statt.

Die Formstation oder (wenn mehrere, z.B. genau zwei, Formstationen hintereinander angeordnet sind) die mehreren Formstationen kann bzw. können zu einer größeren Vorrichtung gehören, die vorgelagerte und/oder nachgelagerte Arbeitsstationen umfasst.

Wenn der Strang an den Formstellen derart beaufschlagt wird, dass der Strang dort nicht durchtrennt wird, so dass eine Kette von aufeinanderfolgenden, noch durch die Hülle miteinander verbundenen, aber mit geformten Enden versehenen Produkten entsteht, kann der Formstation oder den Formstationen beispielsweise eine Hängevorrichtung zum Aufhängen des Produktstrangs nachgeordnet sein.

Der Formstation oder den Formstationen vorgelagerte Arbeitsstationen können insbesondere eine Station zum Bilden, bevorzugt durch Extrusion oder Koextrusion, eines Ausgangsstrangs aus der pastösen Masse umfassen, und/oder eine Station zum Aufbringen eines die Hülle bildenden Hüllenmaterials, bevorzugt als Flüssigkeit oder Paste, auf einen Ausgangsstrang umfassen, und/oder eine Station zum Behandeln eines mit einer Hülle versehenen Ausgangsstrangs mit einem Behandlungsmittel, insbesondere einer Flüssigkeit, bevorzugt einer Solelösung, umfassen, und/oder eine Station zum Fördern des Strangs in einer Transportrichtung in Richtung der, insbesondere mittels eines oder mehrerer zusammenwirkender Endlosförderbänder, umfassen.

Die Erfindung betrifft auch eine Formstation oder eine Anordnung mehrerer, bevorzugt genau zwei, hintereinander angeordneter Formstationen für eine Vorrichtung wie vorstehend beschrieben, wobei die oder jede Formstation die vorstehend genannten Merkmale aufweist. Wenn mehrere, insbesondere genau zwei, Formstationen vorgesehen sind, dann sind diese vorzugsweise zumindest im Wesentlichen baugleich ausgeführt, bevorzugt aber unterschiedlich orientiert, um den Strang an jeder Formstelle mehrmals, aber auf unterschiedliche Weise, insbesondere in unterschiedlichen Orientierungen, beaufschlagen zu können. Hierauf wird an anderer Stelle näher eingegangen.

Alle im Rahmen der vorliegenden Offenbarung genannten möglichen Weiterbildungen der Formstation gelten grundsätzlich für jede Formstation, wenn in einer Ausführungsform mehrere, bevorzugt genau zwei, Formstationen vorgesehen sind.

In einigen Ausführungsbeispielen kann vorgesehen sein, dass der minimale Formspalt, der von den beiden Formkanten gemeinsam gebildet wird, derart gewählt ist, dass der Strang an einer jeweiligen Formstelle eindrückbar, aber nicht durchtrennbar ist. Auf diese Weise kann ein Strang aus noch zusammenhängenden Produkten erzeugt werden.

Alternativ kann der minimale Formspalt derart gewählt sein, dass der Strang an einer jeweiligen Formstelle eindrückbar und nach dem Eindrücken durchtrennbar ist. Dies kann z.B. durch Quetschen, Stanzen oder Schneiden erfolgen. Die Größe des minimalen Formspalts kann dabei Null oder negativ sein, letzteres beispielsweise bei einem Zusammenwirken von Schneide und Gegenschneide.

Durch das Durchtrennen des Strangs an den Formstellen können die Produkte an der Formstation vereinzelt werden. Es ist auch möglich, die Formstation derart auszugestalten, dass der Strang an einer jeweiligen Formstelle nicht eingedrückt, sondern lediglich durchtrennt wird. So können beispielsweise drei Formstationen hintereinander angeordnet sein, wobei an den beiden ersten Formstationen jeweils ein Eindrücken des Strangs in unterschiedlichen Orientierungen erfolgt und der Strang an den jeweiligen Formstellen mittels der dritten Formstation durchtrennt wird. Alternativ kann ein Durchtrennen des Strangs an den Formstellen auch durch eine anders ausgestaltete, nicht von einer Formstation gebildeten Trennvorrichtung erfolgen, die den beiden Formstationen oder auch nur einer einzigen Formstation nachgelagert ist.

Bei einigen Ausführungsformen kann vorgesehen sein, dass der minimale Formspalt mit einer Mittelachse des Durchgangs ausgerichtet ist. Hierdurch wird erreicht, dass die typische Würstchenform erzeugt wird, bei der das jeweilige Wurstende mittig liegt und nicht seitlich versetzt ist.

Des Weiteren kann vorgesehen sein, dass der Durchgang durch Formflächen begrenzt ist, die an der Formstation ausgebildet sind, insbesondere an bewegbaren, jeweils wenigstens ein Formelement aufweisenden Formorganen, bevorzugt Rollen, der Formstation, und/oder dass die Formelemente mit Formflächen versehen sind, insbesondere jeweils an Bereichen, die an eine jeweilige Formkante angrenzen. Die Formflächen können derart gestaltet werden, dass den Produktenden die jeweils gewünschte Form verliehen wird.

In einigen Ausführungsformen kann die Formstation zu einem kontinuierlichen, nicht taktweisen Betrieb mit sich kontinuierlich bewegenden Formelementen ausgebildet sein. In alternativen Ausführungsformen kann die Formstation zu einem diskontinuierlichen, insbesondere taktweisen, Betrieb ausgebildet sein, der zumindest eine Formzeitspanne und eine Freigabezeitspanne umfasst, wobei in der Formzeitspanne sich die Formkanten auf ihrer Bahn in dem Durchgang zum Beaufschlagen des Strangs bewegen und in der Freigabezeitspanne der Strang durch die Formkanten nicht beaufschlagt ist. Insbesondere kann vorgesehen sein, dass in der Freigabezeitspanne die Formkanten zumindest zeitweise nicht bewegt werden.

Die Vorrichtung kann eine Steuervorrichtung aufweisen, mit der der diskontinuierliche Betrieb veränderbar ist, insbesondere zum Verändern des Abstands jeweils zweier unmittelbar aufeinander folgender Formstellen in dem Strang. Hierauf wird an anderer Stelle näher eingegangen. Für bestimmte Anwendungen kann der Freigabezustand dauerhaft eingestellt werden, so dass die Formstation gewissermaßen dauerhaft auf "Durchlassbetrieb" geschaltet und der Strang zu keinem Zeitpunkt beaufschlagt wird. Die erfindungsgemäße Vorrichtung erlaubt also auch eine Betriebsart, in welcher mit der betreffenden Formstation keine Würstchen geformt werden sollen.

In manchen Ausführungsbeispielen kann vorgesehen sein, dass die Formstation genau ein Paar von Formelementen umfasst. Alternativ kann in manchen Weiterbildungen vorgesehen sein, dass die Formstation mehrere Paare von Formelementen umfasst, insbesondere genau zwei Paare, wobei die Paare nacheinander, aber niemals zwei oder mehr Paare gleichzeitig, jeweils einen zum Beaufschlagen des Strangs geeigneten Formspalt in den Durchgängen bilden.

Wenn nur ein Paar von Formelementen vorgesehen oder sichergestellt ist, dass bei mehreren Paaren von Formelementen der Strang zu jedem Zeitpunkt entweder von keinem Paar von Formelementen oder nur von einem Paar von Formelementen beaufschlagt wird, also niemals zwei Paare von Formelementen den Strang gleichzeitig beaufschlagen, dann kann auf besonders einfache Weise und ohne bauliche Veränderungen an der Formstation der Abstand jeweils zweier unmittelbar aufeinanderfolgender Formstellen in dem Strang, also die Würstchenlänge, verändert werden, indem der Betrieb der Formstation so gesteuert wird, dass eine Freigabezeitspanne existiert, in welcher der Durchgang frei ist, der Strang also nicht durch die Formelemente bzw. deren Formkanten beaufschlagt wird. Während einer Freigabezeitspanne kann die Bewegung der Formelemente in Abhängigkeit von der Relativgeschwindigkeit zwischen dem Strang und der Formstation verlangsamt oder angehalten werden, so dass die nächste Formstelle im Strang erst im jeweils gewünschten Abstand von der vorherigen Formstelle gebildet wird.

Ein Verlangsamen oder Anhalten der Bewegung der Formelemente, allgemein also eine Veränderung der Geschwindigkeit der Formelemente, mit anderen Worten ein insofern diskontinuierlicher, insbesondere getakteter, Betrieb der Formstation ist möglich, wenn gemäß bevorzugter Ausführungsformen der Erfindung die Formstation nicht für den Transport des Strangs sorgen muss, also nicht als Fördereinrichtung für den Strang ausgebildet ist. Hierzu ist vorzugsweise der Formstation eine Fördereinrichtung für den Strang zugeordnet, insbesondere vorgelagert, d.h. eine Fördereinrichtung ist zusätzlich zu der Formstation vorgesehen.

Wäre die Formstation derart ausgebildet, dass immer zwei oder mehr Paare gleichzeitig den Strang beaufschlagen, dann wäre eine Abstandsänderung und somit eine Änderung der Würstchenlänge nicht möglich, da dann der Abstand zweier unmittelbar aufeinanderfolgender Formstellen in dem Strang und somit die Würstchenlänge durch den Abstand der Formkanten auf der Bahn fest vorgegeben wäre.

Wenn die Formstation mehrere Paare von Formelementen umfasst, kann vorgesehen sein, dass jedes Paar ein erstes Formelement und ein zweites Formelement aufweist, wobei alle ersten Formelemente an einem ersten Formorgan vorgesehen und gemeinsam durch Bewegen des ersten Formorgans bewegbar sind, und wobei alle zweiten Formelemente an einem zweiten Formorgan vorgesehen und gemeinsam durch Bewegen des zweiten Formorgans bewegbar sind.

Die Bahn, auf der sich die Formkanten bewegen, kann grundsätzlich einen beliebigen Verlauf aufweisen.

In einigen Ausführungsbeispielen kann die Bahn eine umlaufende Bahn sein, d.h. die Formkanten können sich auf einer geschlossenen Bahn bewegen. Dies ist jedoch nicht zwingend. Die Bewegung der Formkanten kann auch eine Hin- und Herbewegung in den Durchgang hinein und aus dem Durchgang heraus sein, wobei diese Hin- und Herbewegung auf einer linearen Bahn oder auf einer gekrümmten verlaufen kann.

Die Bewegung der Formkanten kann auch durch eine Überlagerung mehrerer einzelner Bewegungen erzeugt werden. So kann z.B. einer Hin- und Herbewegung der Formkanten senkrecht zu einer Mittelachse des Durchgangs eine Bewegung mit zumindest einer Komponente parallel zur Mittelachse des Durchgangs überlagert sein.

Gemäß manchen Weiterbildungen kann die Bahn zumindest im Durchgang gekrümmt sein. Vorzugsweise ist die Bahn durchgängig gekrümmt. Eine umlaufende gekrümmte Bahn kann z.B. oval oder ellipsenförmig oder z.B. einen teilweise gekrümmten Verlauf derart aufweisen, dass zwei gerade, parallel oder geneigt zueinander verlaufende Bahnabschnitte an ihren Enden jeweils durch einen gekrümmten Bahnabschnitt miteinander verbunden sind. Auch bei derartigen Bahnen kann durch entsprechende Auslegung des konkreten Bahnverlaufs und der Formelemente in Abhängigkeit von den jeweiligen Gegebenheiten erreicht werden, dass - mehr mehr als ein Paar von Formelemente vorgesehen ist - niemals zwei oder mehr Paare von Formelementen den Strang gleichzeitig beaufschlagen.

In einigen Ausführungsbeispielen kann vorgesehen sein, dass die Bahn eine Kreisbahn ist. Die Formelemente können hierzu um eine Drehachse drehbar antreibbar sein und z.B. von einem als Rolle ausgebildeten Formorgan gebildet oder an einem solchen Formorgan angebracht sein.

Die Formorgane können jeweils um eine Drehachse drehbar sein und zwei um 180° um die Drehachse gegeneinander versetzt angeordnete Formelemente umfassen. Diese zwei Formelemente können bei entsprechender Drehstellung des Formorgans den Durchgang freigeben. Hierdurch ist sichergestellt, dass bei zwei Paaren von Formelementen der Strang zu jedem Zeitpunkt entweder nicht oder nur von einem Paar von Formelementen beaufschlagt wird, also niemals zwei Paare von Formelementen den Strang gleichzeitig beaufschlagen.

Vorzugsweise ist vorgesehen, dass die Formstation zu einem Betrieb mit sich kontinuierlich relativ zu der Formstation bewegbarem Strang ausgebildet ist.

Bevorzugt ist vorgesehen, dass die jeweils ein Paar bildenden Formelemente gegenläufig bewegbar sind.

In einigen Ausführungsbeispielen kann vorgesehen sein, dass die jeweils ein Paar bildenden Formelemente zu, insbesondere gegenläufigen, Drehbewegungen um parallel verlaufende Drehachsen antreibbar sind.

Die Formelemente können jeweils an einer zu einer Drehbewegung um eine Drehachse antreibbaren Rolle vorgesehen sein. Insbesondere können die Formelemente jeweils einstückig mit der Rolle ausgebildet sein. Die Rollen können zumindest an den Formelementen jeweils mit Formflächen zum Formen des Strangs zumindest im Bereich des Durchgangs ausgebildet sein. Hierzu ist es beispielsweise möglich, in Umfangsrichtung um die jeweilige Drehachse vor und/oder hinter einem Formelement befindliche Bereiche der Rolle als insbesondere gekrümmte Formflächen auszubilden.

Die Formelemente können grundsätzlich an einem beliebigen Träger angebracht oder von einem solchen Träger gebildet sein. So können z.B. die Formelemente an einem umlaufenden Förderband angebracht sein.

In manchen Ausführungsbeispielen kann vorgesehen sein, dass die Formkanten jeweils einstückig mit dem Formelement ausgebildet sind oder von dem Formelement gebildet sind oder als separates, bevorzugt aus einem anderen Material als das Formelement ausgebildetes, Bauteil an dem Formelement vorgesehen sind.

Die Formkanten können jeweils im Bereich des Durchgangs gerade ausgebildet oder konkav oder konvex gekrümmt sein. Hierdurch kann eine jeweilige Formstelle in dem Strang in einer jeweils gewünschten, insbesondere an die Eigenschaften des Materials für die Hülle angepassten Weise ausgebildet werden.

Des Weiteren kann bei einigen Ausführungsbeispielen vorgesehen sein, dass der Bewegung zumindest einer, bevorzugt jeder, der Formkanten auf ihrer Bahn eine Zusatzbewegung überlagerbar ist, insbesondere eine Bewegung des jeweiligen Formelements zusätzlich zu dessen, bevorzugt von einer Rotation gebildeten, Basisbewegung.

Wenn beispielsweise das Formelement um eine Drehachse rotiert und somit die Bewegung der Formkante auf einer Kreisbahn verläuft, dann kann dieser Rotationsbewegung eine Zusatzbewegung überlagert werden, beispielsweise durch eine Translation der Formkante oder des Formelements senkrecht zur Drehachse. Dies kann durch einen wie auch immer gearteten separaten Antrieb erreicht werden. Alternativ kann die Zusatzbewegung des Formelementes oder der Formkante vom Antrieb für die Drehbewegung des Formelements direkt oder indirekt abgeleitet werden, beispielsweise durch eine Nockensteuerung. Die Bewegungen der zusammenwirkenden Formkanten zur Bildung des Formspalts können auf diese Weise vielfältiger gestaltet und insbesondere an jeweilige Bedingungen angepasst werden.

Wie an anderer Stelle bereits erwähnt, können mehrere hintereinander angeordnete Formstationen vorgesehen sein. So kann bei einigen Ausführungsbeispielen vorgesehen sein, dass die Formstation eine erste Formstation ist, der wenigstens eine zweite Formstation nachgelagert ist, die einen an das jeweilige Kaliber angepassten Durchgang für den Strang bildet und die zumindest ein zweites Paar von zusammenwirkenden, miteinander synchronisiert bewegbaren Formelementen umfasst, welche jeweils wenigstens eine Formkante umfassen, die sich bei sich bewegendem Formelement auf einer Bahn in dem Durchgang bewegt, wobei die beiden Formkanten auf ihrer Bahn in dem Durchgang eine Relativstellung durchlaufen, in der ein von beiden Formkanten gemeinsam gebildeter Formspalt minimal ist. Die beiden Formstationen können dabei derart relativ zueinander angeordnet und die beiden Paare von Formelementen können derart aufeinander und auf die Bewegung des Strangs relativ zu den Formstationen abgestimmt miteinander synchronisiert bewegbar sein, dass der Strang jeweils durch die beiden zusammenwirkenden Formkanten der beiden Formstationen an der gleichen Formstelle beaufschlagbar ist, und zwar entweder in der gleichen Orientierung oder in unterschiedlichen Orientierungen.

Wie ebenfalls bereits an anderer Stelle erwähnt, können die beiden Formstationen zumindest im Wesentlichen baugleich und/oder hinsichtlich ihrer Funktionalität ähnlich oder identisch ausgeführt oder betreibbar sein. Insbesondere kann die zweite Formstation diejenigen Merkmale aufweisen, die vorstehend im Hinblick auf die erste oder einzige Formstation genannt worden sind.

Die jeweils ein Paar bildenden Formelemente können zu, insbesondere gegenläufigen, Drehbewegungen um parallel verlaufende Drehachsen antreibbar sein, wobei die Drehachsen des ersten Paares relativ zu den Drehachsen des zweiten Paares verdreht sind, insbesondere um 90°. Auf diese Weise können nacheinander in unterschiedlichen Orientierungen auf den Strang einwirkende Formstationen realisiert werden.

In einigen Ausführungsbeispielen mit mehreren Formstationen kann vorgesehen sein, dass der minimale Formspalt an der ersten Formstation derart gewählt ist, dass der Strang an einer jeweiligen Formstelle eindrückbar, aber nicht durchtrennbar ist, wobei der minimale Formspalt an der zweiten Formstation derart gewählt ist, dass der Strang an der jeweiligen Formstelle entweder wiederum eindrückbar, aber weiterhin nicht durchtrennbar ist, oder dass der Strang an der jeweiligen Formstelle durchtrennbar ist, und zwar entweder nach einem Eindrücken oder ohne vorheriges Eindrücken.

Es können mit der Vorrichtung also Produktstränge mit noch zusammenhängenden Produkten oder bereits vereinzelte Produkte erzeugt werden.

Wie ebenfalls an anderer Stelle bereits erwähnt, kann in bevorzugten Weiterbildungen vorgesehen sein, dass die oder jede Formstation stationär und der Strang durch den Durchgang einer jeweiligen Formstation hindurchbewegbar ist. Für die Bewegung des Strangs kann eine Fördereinrichtung vorgesehen sein, die der Formstation, bevorzugt unmittelbar, vorgelagert ist. Die Fördereinrichtung kann beispielsweise ein Paar von zusammenwirkenden Endlosförderbändern umfassen, beispielsweise ein unteres Förderband und ein oberes Förderband. Die beiden Förderbänder können einen langgestreckten Durchgang bilden, in welchem der Strang durch das obere Trum des unteren Förderbands gestützt und in Zusammenwirken mit dem unteren Trum des oberen Förderbands gefördert wird. Vorzugsweise erfolgt in der Fördereinrichtung ausschließlich ein Transportieren des Strangs, insbesondere in Verbindung mit einem Führen und Abstützen, aber keine Ausbildung von Formstellen oder sonstige Beaufschlagung des Stranges, die zu einer beabsichtigten Verformung des Strangs beispielsweise durch Eindrücken führen würde - dies bleibt der Formstation oder den Formstationen vorbehalten. Die Länge der mittels der Fördereinrichtung bereitgestellten Förderstrecke für den Strang kann - gegebenenfalls unter Berücksichtigung von weiteren, der Fördereinrichtung vorgelagerten und von dem Strang zurückzulegenden Wegstrecken - auf die Fördergeschwindigkeit und die Zeit abgestimmt sein, die für ein gegebenenfalls erforderliches Aushärten oder Erstarren des für die Hülle verwendeten Materials notwendig ist, so dass an der Formstation die Produktenden sicher und zuverlässig geformt werden können.

Die Erfindung betrifft auch ein Verfahren zur Herstellung von Lebensmittelprodukten in Würstchenform aus einem ein jeweiliges vorgegebenes oder vorgebbares Kaliber aufweisenden Strang, der eine pastöse Masse und eine diese Masse umgebende Hülle, insbesondere eine Alginathülle, umfasst, mit einer Vorrichtung wie hierin offenbart, bei dem entweder die Formstation kontinuierlich mit sich kontinuierlich bewegenden Formelementen betrieben wird, oder bei dem die Formstation diskontinuierlich, insbesondere taktweise, betrieben wird, wobei der Betrieb zumindest eine Formzeitspanne und eine Freigabezeitspanne umfasst, wobei in der Formzeitspanne die Formkanten auf ihrer Bahn in dem Durchgang zum Beaufschlagen des Strangs bewegt werden und in der Freigabezeitspanne der Strang durch die Formkanten nicht beaufschlagt wird, insbesondere wobei in der Freigabezeitspanne die Formkanten zumindest zeitweise nicht bewegt werden.

Dabei kann vorgesehen sein, dass mittels einer Steuervorrichtung der diskontinuierliche Betrieb der Formstation verändert wird. Dabei kann insbesondere vorgesehen sein, dass durch Verändern der Dauer der Freigabezeitspanne der Abstand jeweils zweier unmittelbar aufeinander folgender Formstellen in dem Strang verändert und so eine jeweilige Länge der Produkte eingestellt wird.

Die Erfindung ermöglicht also die Herstellung unterschiedlicher Würstchenlängen alleine durch eine Steuerung der Bewegung der Formelemente, ohne dass die Formstation, beispielsweise durch Auswechseln der Formelemente oder von die Formelemente umfassenden Formorganen wie z.B. Rollen, umgerüstet oder in sonstiger Weise baulich verändert werden muss. Die Erfindung ermöglicht aber auch einen kontinuierlichen Betrieb mit sich kontinuierlich bewegenden Formelementen, z.B. mit Formorganen, beispielsweise Rollen, die die Formelemente umfassen und mit einer konstanten Drehzahl rotieren. Die Würstchenlänge ist dann zwar durch die konkrete Ausgestaltung der Formstation festgelegt, wobei aber die Steuerung nicht für einen diskontinuierlichen Betrieb der Formstation zu sorgen braucht.

Die Erfindung ermöglicht also die Herstellung von Produkten in Würstchenform ohne Abdrehen. Ein zusätzliches Abdrehen an den Formstellen ist durch die Erfindung zwar nicht ausgeschlossen, wobei aber in bevorzugten Ausführungsformen der Erfindung kein Abdrehen erfolgt.

Die Erfindung wird im Folgenden beispielhaft unter Bezugnahme auf die Zeichnung beschrieben. Es zeigen:
- Fig. 1: jeweils in einer Seitenansicht und in einer geschnittenen Ansicht eine Vorrichtung gemäß einer Ausführungsform der Erfindung,
- Fig. 2: in einer gegenüber Fig. 1 vergrößerten Darstellung eine Anordnung aus zwei hintereinander angeordneten Formstationen gemäß einer weiteren Ausführungsform der Erfindung zum Vereinzeln der Produkte,
- Fig. 3: jeweils in einer Ansicht Rollenpaare für die Formstationen der Anordnung von Fig. 2,
- Fig. 4: die Anordnung von Fig. 2 in einer geschnittenen Ansicht,
- Fig. 5: die Rollenpaare von Fig. 3 in einer geschnittenen Ansicht,
- Fig. 6: schematisch einen möglichen zeitlichen Ablauf bei der Bewegung zweier zusammenwirkender Formelemente einer erfindungsgemäßen Formstation, und
- Fig. 7: verschiedene Ansichten eines als Rolle ausgebildeten Formorgans gemäß einer Ausführungsform der Erfindung.

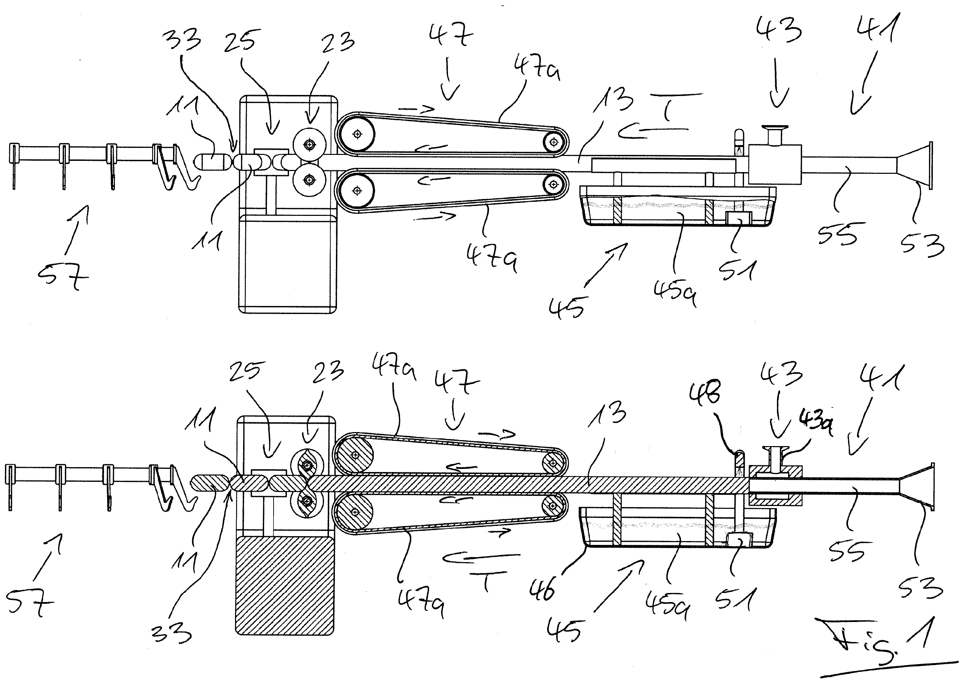

Bei der in Fig. 1 dargestellten erfindungsgemäßen Vorrichtung verläuft die Prozessrichtung von rechts nach links. Die Vorrichtung umfasst eine Station 41 zum Bilden eines Ausgangsstrangs aus einer pastösen Masse, beispielsweise Wurstbrät oder ein vegetarisches oder veganes Lebensmittelprodukt. Die Masse wird über einen Trichter 53 in ein Füllrohr 55 gepresst. Hierzu dient zum Beispiel eine nicht dargestellte Füllmaschine, wie sie auf dem hier in Rede stehenden technischen Gebiet grundsätzlich bekannt ist, so dass hierauf nicht näher eingegangen zu werden braucht. Füllmaschinen sind in unterschiedlichen Ausführungen bekannt. Die Masse wird der Station 41 in einem kontinuierlichen Prozess zugeführt.

Der Endbereich des Füllrohres 55 ist von einer Station 43 zum Aufbringen eines die Hülle der herzustellenden Produkte 11 bildenden Hüllenmaterials, beispielsweise eines Alginats oder einer Alginatlösung, umgeben. Diese Station 43 kann eine Füllmaschine (nicht dargestellt) umfassen, mittels welcher das Hüllenmaterial in den dargestellten Rohrstutzen 43a gepresst wird. Der aus dem Rohr 55 austretende Strang 13 umfasst somit die pastöse Masse als Innenmaterial und das an der Station 43 aufgebrachte Material als äußere Hülle, die an einer nachfolgenden Station 45 mit einem Behandlungsmittel, beispielsweise einer Solelösung, behandelt wird. Ein diese Solelösung 45a enthaltener Behälter 46 ist mit einer Pumpe 41 versehen, die die Solelösung 45a zu einem Applikator 48 fördert, aus dem die Solelösung 45a austritt und so die Hülle, beispielsweise das Alginat, benetzt. Eine solche Behandlung ist nicht zwingend und hängt von der Art des für die Hülle verwendeten Materials ab.

An diese Behandlungsstation 45 schließt sich eine Förderstation 47 an, die zwei umlaufende Endlosförderbänder 47a umfasst. Die beiden inneren Trume der Förderbänder 47a erfassen den Strang 13 und fördern ihn - stützende und führend - in einer Transportrichtung T zu einer erfindungsgemäßen Anordnung aus zwei in Transportrichtung T unmittelbar aufeinanderfolgenden Formstationen 23, 25, die nachstehend näher beschrieben werden.

Die Formstationen 23, 25 dienen dazu, aus dem Strang 13 Würstchen bzw. Produkte in Würstchenform 11 zu formen, indem der Strang 13 an aufeinanderfolgenden Formstellen 33 beaufschlagt wird und so die Produktenden der Produkte 11 geformt werden.

In dem hier dargestellten Ausführungsbeispiel erfolgt die Beaufschlagung des Strangs 13 an den Formstellen 33 derart, dass die aufeinanderfolgenden Produkte 11 noch durch die Hülle miteinander verbunden sind. Es entsteht so eine Wurstkette, die im Anschluss an die Formstationen 23, 25 an einer Hängevorrichtung 57 aufgehängt werden kann. Dieses Aufhängen von hergestellten Wurstketten ist grundsätzlich bekannt, so dass hierauf nicht näher eingegangen zu werden braucht.

Die Transportstrecke zwischen dem Applikator 48 der Behandlungsstation 45 und der ersten Formstation 23 ist in Abhängigkeit von der Transportgeschwindigkeit des Strangs 13 entlang der Transportstrecke T derart gewählt, dass die Hülle ausreichend Zeit hat, um einen jeweils gewünschten Zustand einzunehmen, insbesondere um sicherzustellen, dass genügend Zeit zum Erstarren oder Aushärten der Hülle zur Verfügung steht.

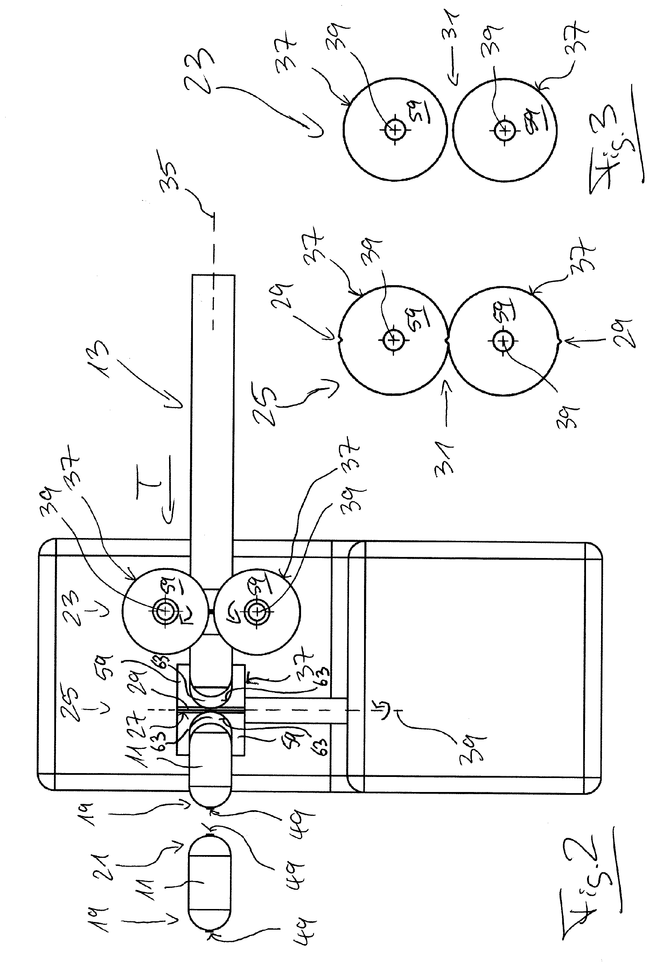

Die Fig. 2 und 3 sowie die Fig. 4 und 5 zeigen eine alternative Ausgestaltung zweier aufeinanderfolgender Formstationen 23, 25, die sich von jener der Fig. 1 lediglich dadurch unterscheiden, dass an der zweiten Formstation 25 der Strang 13 an den Formstellen 33 durchtrennt wird, so dass in diesem Ausführungsbeispiel keine Ketten aus zusammenhängenden Würstchen, sondern vereinzelte Würstchen 11 erzeugt werden, die beispielsweise in einen hier nicht dargestellten Behälter fallen oder mittels nicht dargestellter Fördereinrichtungen beispielsweise zu einer Verpackungsstation weitertransportiert werden können.

Was die konkrete Ausgestaltung der Formstationen 23, 25 anbetrifft, so umfasst jede Formstation ein Paar von zusammenwirkenden Formrollen 37, die jeweils ein Formorgan im Sinne der vorliegenden Offenbarung bilden. Die Rollen 37 eines jeweiligen Paares sind um parallele Drehachsen 39 mittels eines hier nicht dargestellten Antriebs rotierend antreibbar, und zwar gegenläufig. In dem dargestellten Ausführungsbeispiel sind die Drehachsen 39 des Rollenpaares der ersten Formstation 23 horizontal und die Drehachsen 39 des Rollenpaares der zweiten Formstation 25 vertikal ausgerichtet. Die Rollen 37 an der ersten Formstation 23 sind folglich übereinander angeordnet, wohingegen die Rollen 37 an der zweiten Formstation 25 nebeneinander angeordnet sind. Die Rollen 37 eines jeweiligen Paares definieren einen Durchgang 28 für den Strang 13 und sind jeweils mit zwei in diametral entgegengesetzte Richtungen von der jeweiligen Drehachse 39 ausgehenden Formelementen 27 versehen, die an ihren freien Enden, also radial außen, jeweils mit einer hier in diesem Ausführungsbeispiel geraden, parallel zur jeweiligen Drehachse 39 verlaufenden Formkante 29 versehen sind.

Die Drehachsen 39 verlaufen jeweils senkrecht zu einer Mittelachse 35 des Durchgangs 28, die mit der Mittelachse zumindest des im Durchgang 28 befindlichen Abschnitts des Strangs 13 zusammenfällt

Bei den Rollen 37 kann es sich jeweils um einstückige Bauteile beispielsweise aus Kunststoff handeln, die z.B. durch Fräsen in eine Form gebracht worden sind, welche zwei entlang der jeweiligen Drehachse 39 beabstandete, jeweils senkrecht zur Drehachse 93 verlaufende stirnseitige Abschlussscheiben 59 umfassen, zwischen denen sich die beiden Formelemente 27 erstrecken, wobei die Übergänge zwischen den beiden Abschlussscheiben 59, einem die beiden Abschlussscheiben 59 verbindenden, die Drehachse 39 enthaltenden Zentralsteg 61 und den beiden Formelementen 27 von konkav und konvex gekrümmten Flächen gebildet sind, so dass der Durchgang zwischen den beiden Rollen 37 von glatten Flächen 63 begrenzt ist, die Formflächen im Sinne der vorliegenden Offenbarung für den Strang 13 darstellen.

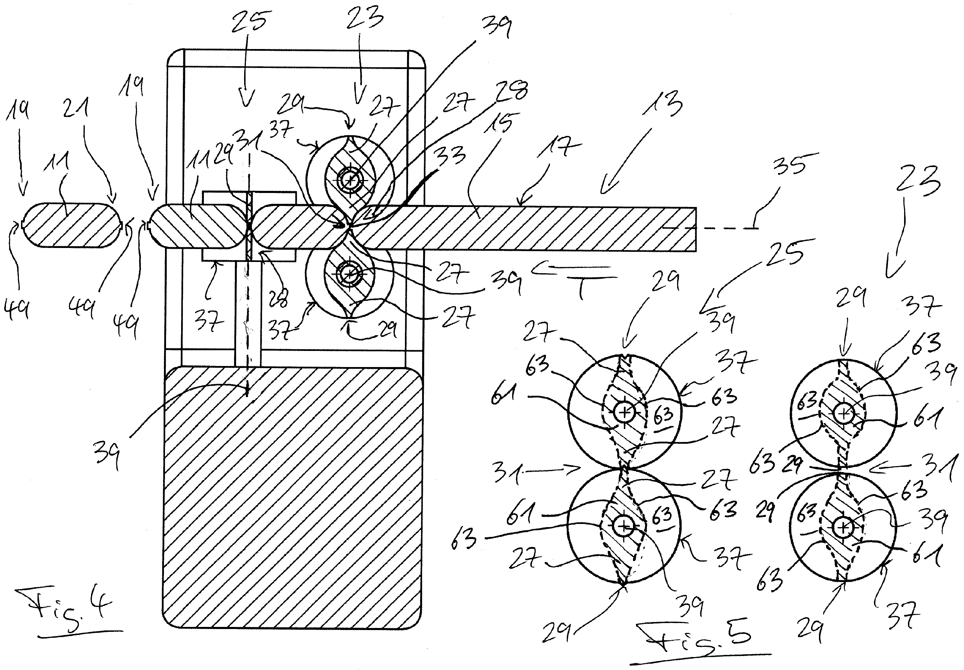

Während des Betriebs bewegen sich die Rollen 37 eines jeweiligen Rollenpaares synchron. Relativ zueinander sind die Rollen 37 eines jeweiligen Rollenpaares derart angeordnet, dass bei minimalem Formspalt 31 zwischen einander zugewandten Formkanten 29 der Formelemente 27 die Formelemente 27 maximal weit in den Durchgang hineinreichen. Diese Stellung ist insbesondere Fig. 4 bei der ersten Formstation 23 zu entnehmen (vgl. auch rechts in Fig. 5). Der Strang 13 ist an dieser Formstelle 33 daher lediglich zusammengedrückt, wird aber nicht durch die Formkanten 29 durchtrennt, da ein von Null verschiedener positiver Abstand zwischen den beiden Formkanten 29 und somit ein positiver Formspalt 31 vorhanden ist.

Die erwähnte Formgebung der Rollen 37 ist derart gewählt, dass die an eine jeweilige Formstelle 33 angrenzenden Bereiche des Strangs 13 zu Produktenden 19, 21 geformt werden, also zu einem vorderen Produkteine 19 und zu einem hinteren Produktende 21, welche die typische, bekannte Form von Wurstenden aufweisen.

Der Betrieb der Formstationen 23, 25 ist derart abgestimmt, dass jede an der ersten Formstation 23 im Strang 13 gebildete Formstelle 33 an der zweiten Formstation 25 erneut beaufschlagt wird, und zwar wiederum von den einander zugewandten Formkanten 29 der beiden jeweils zusammenwirkenden Formelemente 27.

Dies ist in Fig. 3 und 5 veranschaulicht, wobei rechts in Fig. 3 bzw. 5 die beiden Rollen 37 der ersten Formstation 23 und links in Fig. 3 bzw. 5 die beiden Rollen 37 der zweiten Formstation 25 dargestellt sind. Dabei sind die Ansichten um 90° gegenüber verdreht, d.h. rechts in Fig. 3 bzw. Fig. 5 ist eine Seitenansicht (in Fig. 5 geschnitten) dargestellt, wohingegen links in Fig. 3 bzw. Fig. 5 eine Draufsicht (in Fig. 5 geschnitten) dargestellt ist.

Da Fig. 3 eine Seitenansicht bzw. eine Draufsicht von oben zeigt, ist an einer jeweiligen Rolle 37 die Außenseite einer der erwähnten Abschlussscheiben 59 dargestellt, wohingegen in den Schnittansichten der Fig. 5 der in die Formelemente 27 mit den Formkanten 29 übergehende zentrale Steg 61 sowie die Innenseite einer der Abschlussscheiben 59 dargestellt sind. Die Innenseiten der Abschlussscheiben 59 sowie die Übergangsflächen zwischen den Innenseiten der Abschlussscheiben 59, den Formelementen 27 und dem Zentralsteg 61 bilden die erwähnten Formflächen 63 für den Strang 13.

Die beiden Formstationen 23, 25 unterscheiden sich voneinander dadurch, dass - wie erwähnt - bei der ersten Formstation 23 ein positiver Formspalt 31 zwischen den einander zugewandten Formkanten 29 vorhanden ist, so dass der Strang 13 an der ersten Formstation 23 jeweils nur eingedrückt, aber nicht durchtrennt wird, wohingegen bei der zweiten Formstation 25 ein Durchtrennen des Strangs 13 erfolgt. Durch die Formkanten 29 der Formelemente 27 der Rollen 37 der zweiten Formstation 25 wird nämlich jede zuvor an der ersten Formstation 23 gebildete Formstelle 33 erneut beaufschlagt, und zwar zunächst in einer um 90° gegenüber der ersten Formstation 23 gedrehten Orientierung zusammengedrückt und durch Weiterbewegen der Formkanten 29 bis zum Erreichen der Relativstellung mit minimalem Formspalt 31 durchtrennt. In dieser Relativstellung, die in Fig. 3 bzw. Fig. 5 jeweils links dargestellt ist, greift die spitz zulaufende Formkante 29 der einen Rolle 37 in eine entsprechende Nut ein, die an der Formkante 27 der anderen Rolle 37 ausgebildet ist. Der minimale Formspalt 31 ist hier negativ, so dass der Strang 13 an jeder Formstelle 33 mittels der zweiten Formstation 25 durchtrennt wird.

Nicht dargestellt sind Relativstellungen der jeweils ein Paar bildenden Rollen 37, bei denen der jeweilige Durchgang frei ist, also keines der Formelemente 27 mit seiner Formkante 29 in den Durchgang eingreift. In einer solchen Relativstellung, in der also die beiden Formelemente 27 einer jeweiligen Rolle 37 sich parallel zur Transportrichtung T erstrecken, wird der Strang 13 somit von keiner der Formkanten 29 beaufschlagt.

Diese Anordnung stellt sicher, dass trotz des Vorsehens zweier Formelemente 27 pro Rolle 37 zu jedem Zeitpunkt nur jeweils ein einziges Paar von zusammenwirkenden Formelementen 27 den Strang 13 beaufschlagen kann und - in einem diskontinuierlichen Betrieb mit sich abwechselnden Formtakten und Freigabetakten - die Rollen 37 jeweils in einer den Durchgang freigebenden Freigabestellung, also während eines Freigabetaktes, so lange angehalten werden können, wie es für eine jeweils vorgegebene Würstchenlänge erforderlich ist. Die Länge eines Freigabetaktes und somit die Würstchenlänge kann also grundsätzlich beliebig gewählt werden, ohne dass die Rollen 37 ausgewechselt werden müssen. Diese Längeneinstellung kann also alleine durch eine entsprechende Ansteuerung des Antriebs für die Rollen 37 erfolgen.

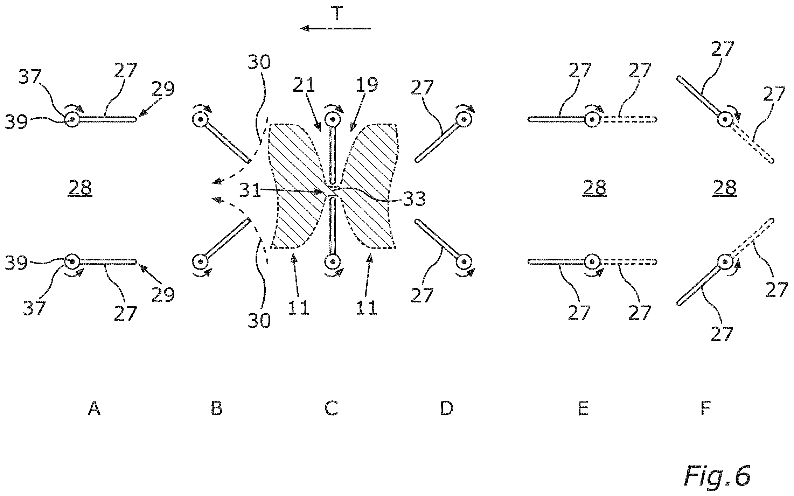

Fig. 6 dient zur Veranschaulichung des zeitlichen Ablaufs der synchronen Bewegung zweier zusammenwirkender Formelemente 27 mit jeweiligen Formkanten 29, wobei lediglich bei den Phasen E und F entsprechend den zuvor erläuterten Ausführungsbeispielen pro Formorgan 37 ein Paar von Formelementen 27 vorgesehen ist, die sich ausgehend von der jeweiligen Drehachse 39 in diametral entgegengesetzte Richtungen erstrecken (ein Formelement 27 ist hier jeweils durch eine gestrichelte Linie angedeutet).

In Phase A ist der Durchgang 28 frei. Wie Phase B zeigt, bewegen sich die Formkanten 29 gegenläufig auf Kreisbahnen 30, wobei die Bewegungskomponente parallel zur Transportrichtung T auf die Fördergeschwindigkeit des Strangs 13 abgestimmt ist. Das Erreichen einer Relativstellung mit minimalem Formspalt 31 zwischen den einander zugewandten, zusammenwirkenden Formkanten 29 ist in Phase C dargestellt. Der Formspalt 31 ist hier positiv, d.h. der Strang 13 wird an dieser Formstelle 33 lediglich zusammengedrückt, aber nicht durchtrennt. Zur Veranschaulichung sind im Bereich dieser Formstelle 33 die mittels der Formelemente 27 geformten Produktenden 19, 21 dargestellt, also das hintere Produktende 21 und das vordere Produktende 19 an unmittelbar aufeinanderfolgenden Produkten 11. Bei Weiterbewegung über Phase D bis in die Phase E geben die Formelemente 27 den Durchgang 28 wieder frei, woraufhin sich bei Weiterbewegung der Formelemente 27 der nächste Formvorgang anschließen kann, und zwar entweder durch das gleiche Paar von Formelementen oder - wie bei Phase E und Phase F durch die gestrichelten Linien angedeutet - durch ein zweites Paar von Formelementen 27.

Bei einem diskontinuierlichen Betrieb kann die Drehung der Formorgane 37 und somit die Bewegung der Formelemente 27 bei sich in einer Freigabestellung gemäß Phase A und Phase E befindlichen Formelementen solange angehalten werden (Freigabezeitspanne bzw. Freigabetakt), wie es erforderlich ist, um bei anschließender Weiterbewegung der Formelemente 27 (Formzeitspanne bzw. Formtakt) die nächste Formstelle 33 im der jeweils gewünschten Würstchenlänge entsprechenden Abstand von der zuvor gebildeten Formstelle 33 zu bilden. Dies gilt unabhängig davon, ob die Formorgane 37 jeweils nur ein Formelement 27 oder zwei Formelemente 27 wie in den Phasen E und F angedeutet aufweisen.

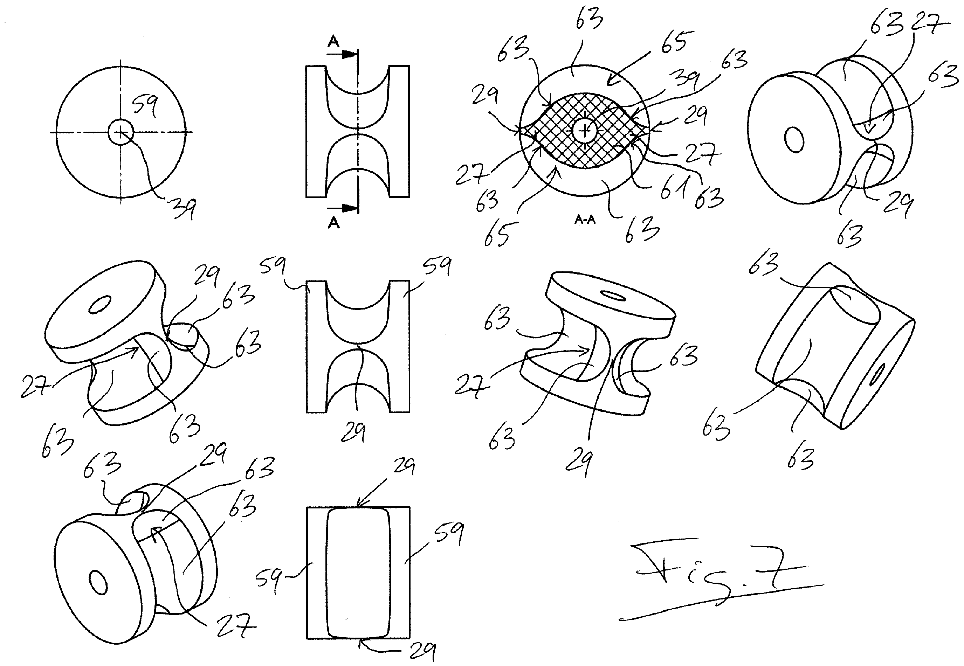

Fig. 7 zeigt in verschiedenen Ansichten eine Rolle 37, die bei den vorstehend beschriebenen Formstationen 23, 25 eingesetzt werden kann, d.h. eine Formstation 23, 25 umfasst dann ein Paar derartiger Rollen 37, die mit parallel zueinander verlaufenden Achsen angeordnet sind und dazwischen den Durchgang 28 für den Strang 13 bilden.

Die Rolle 37 umfasst zwei Abschlussscheiben 59, zwischen denen sich ein Zentralsteg 61 erstreckt, durch den die Drehachse 39 verläuft und von dem die jeweils mit einer Formkante 29 versehenen Formelemente 27 ausgehen, und zwar jeweils in Richtung der Formkante 29 nach radial außen sich verjüngend. Die Formkanten 29 sind hier gerade, d.h. liegen über die gesamte Breite der Rolle 37 auf dem gleichen Radius wie der Umfang der Abschlussscheiben 59. Alternativ können die Formkanten 29 konkav oder konvex gekrümmt ausgeführt sein. Die Innenseiten der Abschlussscheiben 59, die in Umfangsrichtung weisenden Seiten, also die Flanken, der Formelemente 27 sowie die Seiten des Zentralstegs 61 sind gekrümmte Flächen, die ineinander übergehende Formflächen 63 bilden und insgesamt in Umfangsrichtung zwischen den beiden Formelementen 27 jeweils einen Raum 65 begrenzen, der - in einer Abwicklung betrachtet - zumindest näherungsweise dem Negativ der einen Hälfte eines in der Mitte, d.h. entlang seiner Mittelachse, geteilten Würstchens entspricht, dessen Enden mit den Formelementen 27 und deren Formkanten 29 einer zwei derartige Rollen 37 umfassenden Formstation 23, 25 geformt werden. Anders ausgedrückt könnte die Hälfte eines mit einem solchen Rollenpaar geformten Würstchens - eine entsprechende Länge vorausgesetzt - zumindest näherungsweise exakt in diesen Raum 65 hineingelegt werden

### Bezugszeichenliste

- 11: Produkt, Würstchen
- 13: Strang
- 15: Masse
- 17: Hülle
- 19: vorderes Produktende
- 21: hinteres Produktende
- 23: erste Formstation
- 25: zweite Formstation
- 27: Formelement
- 28: Durchgang
- 29: Formkante
- 30: Bahn
- 31: Formspalt
- 33: Formstelle
- 35: Mittelachse
- 37: Formorgan, Rolle
- 39: Drehachse
- 41: Bildungsstation
- 43: Aufbringstation
- 43a: Rohrstutzen
- 45: Behandlungsstation
- 45a: Behandlungsmittel
- 46: Behälter
- 47: Förderstation
- 47a: Endlosförderband
- 48: Applikator
- 49: Öffnung
- 51: Pumpe
- 53: Trichter
- 55: Rohr
- 57: Hängevorrichtung
- 59: Abschlussscheibe
- 61: Zentralsteg
- 63: Formfläche
- 65: Raum

- T: Transportrichtung

## Patentansprüche

1. Vorrichtung zur Herstellung von Lebensmittelprodukten (11) in Würstchenform aus einem ein jeweiliges vorgegebenes oder vorgebbares Kaliber aufweisenden Strang (13), der eine pastöse Masse (15) und eine diese Masse (15) umgebende Hülle (17), insbesondere eine Alginathülle, umfasst, wobei die Vorrichtung zum Formen der Produktenden (19, 21) wenigstens eine Formstation (23, 25), insbesondere zwei oder mehrere hintereinander angeordnete, bevorzugt unterschiedlich orientierte, Formstationen (23, 25), aufweist, wobei die oder jede Formstation (23, 25) einen an das jeweilige Kaliber angepassten Durchgang (28) für den Strang (13) bildet und zumindest ein Paar von zusammenwirkenden, miteinander synchronisiert bewegbaren Formelementen (27) umfasst, welche jeweils wenigstens eine Formkante (29) umfassen, die sich bei sich bewegendem Formelement (27) auf einer Bahn (30) in dem Durchgang (28) bewegt, und
wobei die beiden Formkanten (29) auf ihrer Bahn (30) in dem Durchgang (28) eine Relativstellung durchlaufen, in der ein von den beiden Formkanten (29) gemeinsam gebildeter Formspalt (31) minimal ist und der Strang (13) zur Bildung einer jeweiligen Formstelle (33) durch die beiden zusammenwirkenden Formkanten (29) beaufschlagbar, insbesondere eindrückbar, ist.

2. Vorrichtung nach Anspruch 1,
wobei der minimale Formspalt (31) derart gewählt ist, dass der Strang (13) an einer jeweiligen Formstelle (33) eindrückbar, aber nicht durchtrennbar ist, oder wobei der minimale Formspalt (31) derart gewählt ist, dass der Strang (13) an einer jeweiligen Formstelle (33) eindrückbar und nach dem Eindrücken durchtrennbar ist.

3. Vorrichtung nach Anspruch 1 oder 2,
wobei die Formstation (23, 25) genau ein Paar von Formelementen (27) umfasst, oder wobei die Formstation (23, 25) mehrere Paare von Formelementen (27) umfasst, wobei die Paare nacheinander, aber niemals zwei oder mehr Paare gleichzeitig, jeweils einen zum Beaufschlagen des Strangs (13) geeigneten Formspalt (31) in dem Durchgang (28) bilden, insbesondere wobei jedes Paar ein ersten Formelement (27) und ein zweites Formelement (27) aufweist, insbesondere wobei alle ersten Formelemente (27) an einem ersten Formorgan (37) vorgesehen und gemeinsam durch Bewegen des ersten Formorgans (37) bewegbar sind und alle zweiten Formelemente (27) an einem zweiten Formorgan (37) vorgesehen und gemeinsam durch Bewegen des zweiten Formorgans (37) bewegbar sind, insbesondere wobei die Formorgane (37) jeweils um eine Drehachse (39) drehbar sind und zwei um 180° um die Drehachse (39) gegeneinander versetzt angeordnete Formelemente (27) umfassen.

4. Vorrichtung nach einem der vorhergehenden Ansprüche,
wobei der minimale Formspalt (31) mit einer Mittelachse (35) des Durchgangs (28) ausgerichtet ist, und/oder
wobei die Formelemente (29) mit Formflächen (63) versehen sind, insbesondere jeweils an Bereichen, die an eine jeweilige Formkante (29) angrenzen, und/oder wobei der Durchgang (28) durch Formflächen (63) begrenzt ist, die an der Formstation (23, 25) ausgebildet sind, insbesondere an bewegbaren, jeweils wenigstens ein Formelement (27) aufweisenden Formorganen (37), bevorzugt zu einer Drehbewegung antreibbaren Rollen.

5. Vorrichtung nach einem der vorhergehenden Ansprüche,
wobei die Bahn (30) eine umlaufende Bahn ist, und/oder wobei die Bahn (30) zumindest im Durchgang (28), bevorzugt durchgängig, gekrümmt ist, und/oder
wobei die Bahn (30) eine Kreisbahn ist, insbesondere eine Kreisbahn um eine senkrecht zu einer Mittelachse (35) des Durchgangs (28) verlaufende Drehachse (39).

6. Vorrichtung nach einem der vorhergehenden Ansprüche,
wobei die Formstation (23, 25) zu einem kontinuierlichen, nicht taktweisen Betrieb mit sich kontinuierlich bewegenden Formelementen (27) ausgebildet ist, oder wobei die Formstation (23, 25) zu einem diskontinuierlichen, insbesondere taktweisen, Betrieb ausgebildet ist, der zumindest eine Formzeitspanne und eine Freigabezeitspanne umfasst, wobei in der Formzeitspanne sich die Formkanten (29) auf ihrer Bahn (30) in dem Durchgang (28) zum Beaufschlagen des Strangs (13) bewegen und in der Freigabezeitspanne der Strang (13) durch die Formkanten (29) nicht beaufschlagt ist, insbesondere wobei in der Freigabezeitspanne die Formkanten (29) zumindest zeitweise nicht bewegt werden,
insbesondere wobei die Vorrichtung eine Steuervorrichtung aufweist, mit der der diskontinuierliche Betrieb veränderbar ist, insbesondere zum Verändern des Abstands jeweils zweier unmittelbar aufeinander folgender Formstellen (33) in dem Strang (13).

7. Vorrichtung nach einem der vorhergehenden Ansprüche,
wobei die jeweils ein Paar bildenden Formelemente (27) gegenläufig bewegbar sind, und/oder
wobei die jeweils ein Paar bildenden Formelemente (27) zu, insbesondere gegenläufigen, Drehbewegungen um parallel verlaufende Drehachsen (39) antreibbar sind, wobei insbesondere die Drehachsen (39) senkrecht zu einer Mittelachse (35) des Durchgangs (28) verlaufen.

8. Vorrichtung nach einem der vorhergehenden Ansprüche,
wobei die Formelemente (27) jeweils an einer zu einer Drehbewegung um eine, insbesondere senkrecht zu einer Mittelachse (35) des Durchgangs (28) verlaufende, Drehachse (39) antreibbaren Rolle (37) vorgesehen und insbesondere einstückig mit der Rolle (37) ausgebildet sind, insbesondere wobei die Rollen (37) zumindest an den Formelementen (27) jeweils mit Formflächen (63) zum Formen des Strangs (13) zumindest im Bereich des Durchgangs (28) ausgebildet sind.

9. Vorrichtung nach einem der vorhergehenden Ansprüche,
wobei die Formkanten (29) jeweils einstückig mit dem Formelement (27) ausgebildet sind oder von dem Formelement (27) gebildet sind oder als separates, bevorzugt aus einem anderen Material als das Formelement (27) ausgebildetes, Bauteil an dem Formelement (27) vorgesehen sind, und/oder
wobei die Formkanten (29) jeweils im Bereich des Durchgangs (28) gerade ausgebildet oder konkav oder konvex gekrümmt sind, und/oder wobei der Bewegung zumindest einer, bevorzugt jeder, der Formkanten (29) auf ihrer Bahn (30) eine Zusatzbewegung überlagerbar ist, insbesondere durch eine Bewegung des jeweiligen Formelementes (27) zusätzlich zu dessen, bevorzugt von einer Rotation gebildeten, Basisbewegung.

10. Vorrichtung nach einem der vorhergehenden Ansprüche,
wobei die Formstation eine erste Formstation (23) ist, der wenigstens eine zweite Formstation (25) nachgelagert ist, die einen an das jeweilige Kaliber angepassten Durchgang (28) für den Strang (13) bildet und zumindest ein zweites Paar von zusammenwirkenden, miteinander synchronisiert bewegbaren Formelementen (27) umfasst, welche jeweils wenigstens eine Formkante (29) umfassen, die sich bei sich bewegendem Formelement (27) auf einer Bahn (30) in dem Durchgang (28) bewegt, wobei die beiden Formkanten (29) auf ihrer Bahn (30) in dem Durchgang (28) eine Relativstellung durchlaufen, in der ein von den beiden Formkanten (29) gemeinsam gebildeter Formspalt (31) minimal ist, und wobei die beiden Formstationen (23, 25) derart relativ zueinander angeordnet und die beiden Paare von Formelementen (27) derart aufeinander und auf die Bewegung des Strangs (13) relativ zu den Formstationen (23, 25) abgestimmt bewegbar sind, dass der Strang (13) jeweils durch die beiden zusammenwirkenden Formkanten (29) der beiden Formstationen (23, 25) nacheinander an der gleichen Formstelle (33) entweder in der gleichen Orientierung oder in unterschiedlichen Orientierungen beaufschlagbar ist, insbesondere wobei die beiden Formstationen (23, 25) unterschiedlich geformte Formflächen (63) zum Beaufschlagen des Strangs (13) aufweisen,
insbesondere wobei die zweite Formstation (25) die Merkmale zumindest eines der Ansprüche 2 bis 9 aufweist.

11. Vorrichtung nach Anspruch 10,
wobei die jeweils ein Paar bildenden Formelemente (27) zu, insbesondere gegenläufigen, Drehbewegungen um parallel verlaufende Drehachsen (39) antreibbar sind, wobei die Drehachsen (39) des ersten Paares relativ zu den Drehachsen (39) des zweiten Paares verdreht sind, insbesondere um 90°, und/oder
wobei der minimale Formspalt (31) an der ersten Formstation (23) derart gewählt ist, dass der Strang (13) an einer jeweiligen Formstelle (33) eindrückbar, aber nicht durchtrennbar ist, und wobei der minimale Formspalt (31) an der zweiten Formstation (25) derart gewählt ist, dass der Strang (13) an der jeweiligen Formstelle (33) entweder wiederum eindrückbar, aber weiterhin nicht durchtrennbar ist, oder dass der Strang (13) an der jeweiligen Formstelle (33) durchtrennbar ist, und zwar entweder nach einem Eindrücken oder ohne vorheriges Eindrücken.

12. Vorrichtung nach einem der vorhergehenden Ansprüche,
wobei die oder jede Formstation (23, 25) stationär und der Strang (13) durch den Durchgang (28) einer jeweiligen Formstation (23, 25) hindurch bewegbar ist, und/oder
wobei die Vorrichtung für einen Betrieb mit sich kontinuierlich relativ zu der Formstation (23, 25) bewegbarem Strang (13) ausgebildet ist.

13. Vorrichtung nach einem der vorhergehenden Ansprüche,
wobei die Vorrichtung eine Steuervorrichtung aufweist, mit der zumindest die Geschwindigkeit der Bewegung der Formkanten (29) auf der Bahn veränderbar ist, insbesondere zur Anpassung an die Geschwindigkeit der Relativbewegung zwischen dem Strang (13) und der Formstation (23, 25), und/oder
wobei die Vorrichtung eine oder mehrere der Formstation (23, 25) vorgelagerte Arbeitsstationen umfasst, insbesondere eine Station (41) zum Bilden eines Ausgangsstrangs aus der pastösen Masse (15), bevorzugt durch Extrusion oder Koextrusion, und/oder eine Station (43) zum Aufbringen auf einen Ausgangsstrang eines die Hülle (17) bildenden Hüllenmaterials, bevorzugt als Flüssigkeit oder Paste, und/oder eine Station (45) zum Behandeln eines mit einer Hülle (17) versehenen Ausgangsstrangs mit einem Behandlungsmittel (45a), insbesondere einer Flüssigkeit, bevorzugt einer Solelösung, und/oder einer Station (47) zum Fördern des Stranges (13) in einer Transportrichtung (T) in Richtung der Formstation (23, 25), insbesondere mittels eines oder mehrerer zusammenwirkender Endlosförderbänder (47a).

14. Formstation oder Anordnung aus zwei oder mehreren Formstationen, für eine Vorrichtung nach einem der vorstehenden Ansprüche,
wobei die oder jede Formstation (23, 25) einen an das jeweilige Kaliber angepassten Durchgang (28) für den Strang (13) bildet und zumindest ein Paar von zusammenwirkenden, miteinander synchronisiert bewegbaren Formelementen (27) umfasst, welche jeweils wenigstens eine Formkante (29) umfassen, die sich bei sich bewegendem Formelement (27) auf einer Bahn (30) in dem Durchgang (28) bewegt, und wobei die beiden Formkanten (29) auf ihrer Bahn (30) in dem Durchgang (28) eine Relativstellung durchlaufen, in der ein von den beiden Formkanten (29) gemeinsam gebildeter Formspalt (31) minimal ist und der Strang (13) zur Bildung einer jeweiligen Formstelle (33) durch die beiden zusammenwirkenden Formkanten (29) beaufschlagbar, insbesondere eindrückbar, ist, insbesondere mit den weiteren Merkmalen zumindest eines der Ansprüche 2 bis 9.

15. Verfahren zur Herstellung von Lebensmittelprodukten (11) in Würstchenform aus einem ein jeweiliges vorgegebenes oder vorgebbares Kaliber aufweisenden Strang (13), der eine pastöse Masse (15) und eine diese Masse (15) umgebende Hülle (17), insbesondere eine Alginathülle, umfasst, mit einer Vorrichtung nach einem der vorhergehenden Ansprüche,
bei dem entweder die Formstation (23, 25) kontinuierlich mit sich kontinuierlich bewegenden Formelementen (27) betrieben wird, oder bei dem die Formstation (23, 25) diskontinuierlich, insbesondere taktweise, betrieben wird, wobei der Betrieb zumindest eine Formzeitspanne und eine Freigabezeitspanne umfasst, wobei in der Formzeitspanne die Formkanten (29) auf ihrer Bahn (30) in dem Durchgang (28) zum Beaufschlagen des Strangs (13) bewegt werden und in der Freigabezeitspanne der Strang (13) durch die Formkanten (29) nicht beaufschlagt wird, insbesondere wobei in der Freigabezeitspanne die Formkanten (29) zumindest zeitweise nicht bewegt werden,
insbesondere wobei mittels einer Steuervorrichtung der diskontinuierliche Betrieb der Formstation (23, 25) verändert wird, insbesondere wobei durch Verändern der Dauer der Freigabezeitspanne der Abstand jeweils zweier unmittelbar aufeinander folgender Formstellen (33) in dem Strang (13) verändert und so eine jeweilige Länge der Produkte (11) eingestellt wird.
